# FASCICULE DE BREVET EUROPEEN

(11) **EP 2 627 144 B1**
(45) Date de publication et mention de la délivrance du brevet: **27.09.2017**
(21) Numéro de dépôt: 13154541.0
(22) Date de dépôt: 08.02.2013
(51) Int. Cl.: H04L 12/833, H04W 84/04, H04W 72/12, H04W 52/02

(54) **Gestion dynamique de petites cellules pour optimiser la consommation énergétique d'un réseau en fonction du trafic**
Dynamische Verwaltung von kleinen Zellen, um den Energieverbrauch eines Netzwerkes Verkehr zu optimieren basiered auf Datenverkehr
Dynamic management of small cells to optimize energy network consumption based on network traffic

(30) Priorité: 08.02.2012 FR 1251166
(43) Date de publication de la demande: 14.08.2013
(73) Titulaire: COMMISSARIAT À L'ÉNERGIE ATOMIQUE ET AUX ÉNERGIES ALTERNATIVES, 75015 Paris (FR)
(72) Inventeur: De Domenico, Antonio, 03100 FROSINONE (IT); Gupta, Rohit, 01099 Dresden (DE); Calvanese Strinati, Emilio, 38000 GRENOBLE (FR)
(74) Mandataire: Regimbeau

(56) Documents cités:
- WO-A1-2009/071693
- WO-A2-2004/008794
- US-A1- 2004 002 341
- US-A1- 2010 169 498
- US-A1- 2010 285 812
- US-A1- 2011 070 907
- US-A1- 2011 244 900

## Description

### DOMAINE TECHNIQUE GENERAL

L'invention concerne de manière générale le domaine des réseaux de télécommunications cellulaires et plus particulièrement celui mettant en oeuvre des petites cellules.

### ETAT DE LA TECHNIQUE

L'usage de plus en plus courant de terminaux connectés à un réseau cellulaire (par exemple des téléphones intelligents (en anglais, *« smartphone* »), des ordinateurs, etc.) a provoqué une augmentation du trafic de sorte que les réseaux cellulaires sont de plus en plus surchargés.

Pour pallier ce problème, des réseaux de petites cellules ont été proposés et déployés.

On précise que le terme petite cellule désigne aussi bien par ordre de taille croissante : une attocellule, une femtocellule, une pico-cellule, ou bien encore une micro-cellule.

Une petite cellule comprend une petite station de base de faible puissance prévue pour offrir une couverture radio limitée et dédiée surtout un usage résidentiel ou en entreprise. Les petites cellules sont souvent déployées à l'intérieur de bâtiments et sont connectées au réseau d'un opérateur via une connexion Internet haut débit et peuvent supporter un nombre limité de communications simultanées (voix ou données), typiquement de deux à huit communications simultanées.

Ainsi les petites cellules permettent d'améliorer la couverture cellulaire ainsi que la capacité du réseau d'un opérateur dans une zone donnée.

Un problème est que les petites cellules sont souvent déployées de manière chaotique, sans réelle planification, de sorte que le niveau d'interférences entre cellules voisines augmente (une communication dans une cellule peut gêner une communication dans la cellule voisine).

Un autre problème est qu'un tel déploiement réduit l'efficacité énergétique du réseau car certaines zones peuvent être suréquipées en petites cellules ce qui provoque une consommation inutile d'énergie, les petites cellules pouvant être actives inutilement.

On pourra se référer au document Y. Chen, S. Zhang, and S. Xu, "Characterizing Energy Efficiency and Deployment Efficiency Relations for Green Architecture Design," Proc. IEEE ICC '10, Cape Town, South Africa, May 2010 qui a mis en évidence de tels problèmes.

Des solutions existent pour gérer un réseau de cellules. Le document US 2011/070907 A1 décrit un procédé de gestion d'un réseau de cellules dans lequel plusieurs files de données sont gérées au moyen de plusieurs cellules. Toutefois, cette gestion n'est pas optimale.

Il existe par conséquent un besoin pour une activation intelligente et dynamique des petites cellules pour limiter le cout énergétique et en même temps garantir une qualité de service (en anglais « *Quality of Service »,* (QoS)) pour les utilisateurs.

### PRESENTATION DE L'INVENTION

L'invention propose de pallier au moins un de ces inconvénients.

A cet effet, l'invention propose un procédé de gestion du trafic d'un réseau d'une pluralité de stations de base de petites cellules disposées dans une macro-cellule dans laquelle se trouve au moins un terminal, chaque station de base de petite cellule étant adaptée pour couvrir une petite cellule de la macro-cellule, le procédé comprenant les étapes suivantes :
- détermination d'au moins une connexion possible entre ledit au moins un terminal et une station de base de petite cellule;
- mise en file d'attente de plusieurs paquets de données à destination dudit au moins un terminal, chaque paquet de données étant défini par au moins un niveau de priorité;
- classement des paquets de données selon leur niveau de priorité;
le procédé comprenant en outre, dès qu'un paquet de données de la file d'attente a un niveau de priorité maximal, les étapes suivantes :
- sélection d'une petite cellule adaptée pour couvrir au moins un premier terminal pour lequel ledit paquet de données ayant un niveau de priorité maximal est destiné, dit terminal prioritaire ; seule ladite petite cellule sélectionnée devra être active;
- détermination d'un ensemble à transmettre d'au moins un paquet de données ayant un niveau de priorité inférieur au niveau de priorité maximal à destination d'au moins un second terminal présent dans ladite petite cellule activée, dit terminal non prioritaire et/ou à destination dudit terminal prioritaire;
- connexion dudit terminal prioritaire et/ou dudit terminal non prioritaire à la station de base de ladite petite cellule active ;
- routage des paquets de données dudit ensemble à transmettre vers les terminaux prioritaires et non prioritaires.

L'invention est avantageusement complétée par les caractéristiques suivantes, prises seules ou en une quelconque de leur combinaison techniquement possible :
- la sélection consiste à la mise en oeuvre des sous-étapes suivantes :
   ∘ on active au moins une petite cellule adaptée pour couvrir au moins un terminal prioritaire pour lequel ledit paquet de données ayant un niveau de priorité maximal est destinée ;
   ∘ dans le cas où plusieurs petites cellules sont activées et couvrent le terminal prioritaire ; on sélectionne parmi les petites cellules activées au moins une petite cellule;
   ∘ on désactive, lesdites petites cellules activées non sélectionnées.
- la sélection consiste à la mise en oeuvre des sous-étapes suivantes :
   ∘ on sélectionne parmi les petites cellules activées couvrant le terminal prioritaire au moins une petite cellule;
   ∘ on active ladite petite cellule sélectionnée.
- le niveau de priorité est fonction d'une durée, le niveau de priorité étant maximal à l'issue d'une durée seuil pour laquelle le paquet de données est considéré comme perdu.
- le seuil est fonction de la durée nécessaire pour activer une petite cellule.
- le seuil est fonction de la durée nécessaire pour évaluer la qualité de la liaison radio entre un terminal et une petite cellule.
- après le routage des paquets de données, on désactive la petite cellule active.
- on sélectionne la petite cellule la plus proche dudit terminal prioritaire.
- on sélectionne la petite cellule pour laquelle le lien radio entre la petite cellule et le terminal prioritaire est le meilleur.

L'invention propose également un réseau de communication comprenant un réseau d'une pluralité de stations de base de petites cellules disposées dans une macro-cellule dans laquelle se trouve au moins un terminal, chaque station de base de petite cellule étant adaptée pour couvrir une petite cellule de la macro-cellule et pour être en liaison radio avec ledit au moins un terminal, le réseau comprenant un module de gestion connecté au réseau de stations de base de petites cellules, le module de gestion comprenant des moyens pour stocker les paquets de données et pour gérer le trafic de manière centralisée au moyen d'un procédé selon l'une des revendications précédentes.

Et l'invention propose enfin un réseau de communication comprenant un réseau d'une pluralité de stations de base de petites cellules disposées dans une macro-cellule dans laquelle se trouve au moins un terminal, chaque station de base de petite cellule étant adaptée pour couvrir une petite cellule de la macro-cellule et pour être en liaison radio avec ledit au moins un terminal, réseau dans lequel les stations de base de petites cellules comprennent des moyens pour stocker les paquets de données et pour gérer le trafic de manière distribuée au moyen d'un procédé selon l'une des revendications précédentes.

Les avantages de l'invention sont multiples.

L'invention permet d'activer de manière dynamique uniquement la ou les petite(s) cellule(s) nécessaire(s) à la transmission des paquets de données.

En outre, la période d'activation de la ou les petite(s) cellule(s) nécessaire(s) est optimisée.

En conséquence, la puissance nécessaire à la transmission est optimisée contrairement aux techniques de l'état de la technique selon lesquelles les paquets de données sont transmis sans réelle planification. En d'autres termes, tous les paquets de données sont vus comme ayant un niveau de priorité maximal.

L'invention s'applique à plusieurs systèmes de télécommunications : LTE (en anglais, « *Long Term Evolution* »), UMTS (en anglais, « *Universal Mobile Telecommunication Systems* »), OFDMA (en anglais, « *Orthogonal Frequency Division Multiple Access* »), etc.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre une macro-cellule conforme à l'invention;
- les figures 2a et 2b illustrent deux modes de réalisation d'une architecture d'une macro-cellule conforme à l'invention;
- la figure 3 illustre des étapes d'un procédé conforme à l'invention.

### DESCRIPTION DETAILLEE DE L'INVENTION

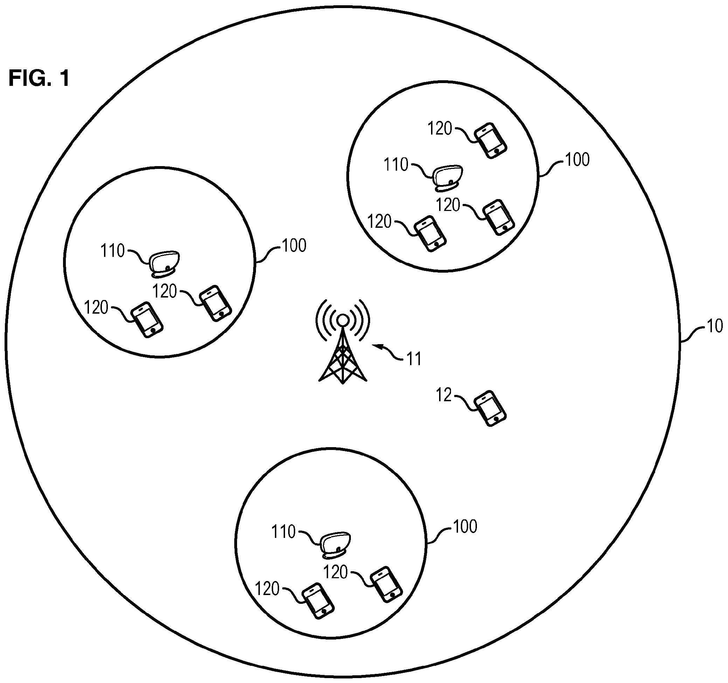

En relation avec la figure 1 un réseau de communication conforme à un mode de réalisation de l'invention comprend une station de base 11 contrôlant des communications dans une macro-cellule 10.

Des terminaux 120 tels que des smartphones communiquent avec d'autres terminaux situés soit dans la même macro-cellule soit dans une autre macro-cellule (non représentée) par l'intermédiaire de la station de base 11. Les terminaux communiquent soit des données soit de la voix.

La macro-cellule comprend un nombre N de petites cellules 100. Chaque petite cellule comprend une station de base de petite cellule 110 qui contrôle les communications dans la petite cellule 100.

Chaque station de base de petite cellule est adaptée pour être en liaison radio avec au moins un terminal mobile 120 présent dans la petite cellule 100.

On entend par liaison radio entre un terminal et une station de base de petite cellule, le fait que le terminal est connecté à la station de base de petite cellule de sorte que le terminal communique avec cette station de base de petite cellule.

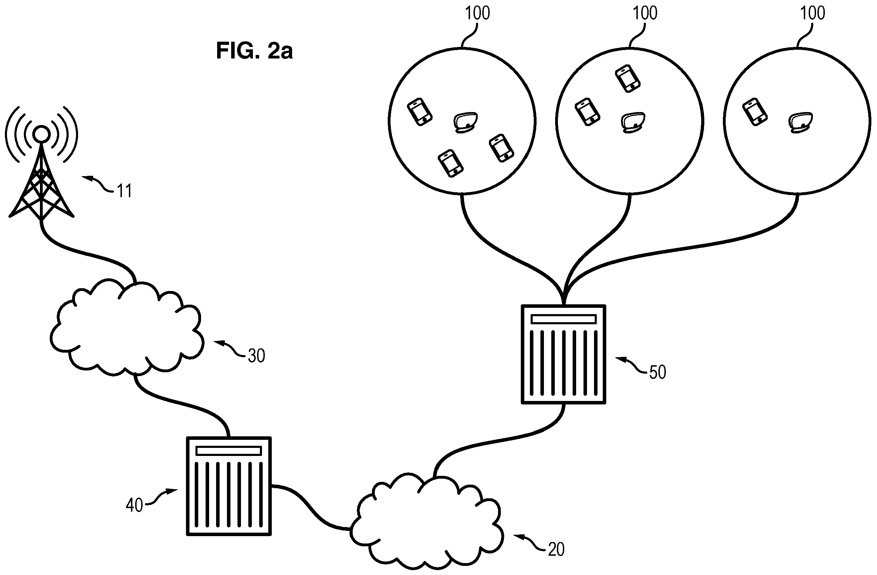

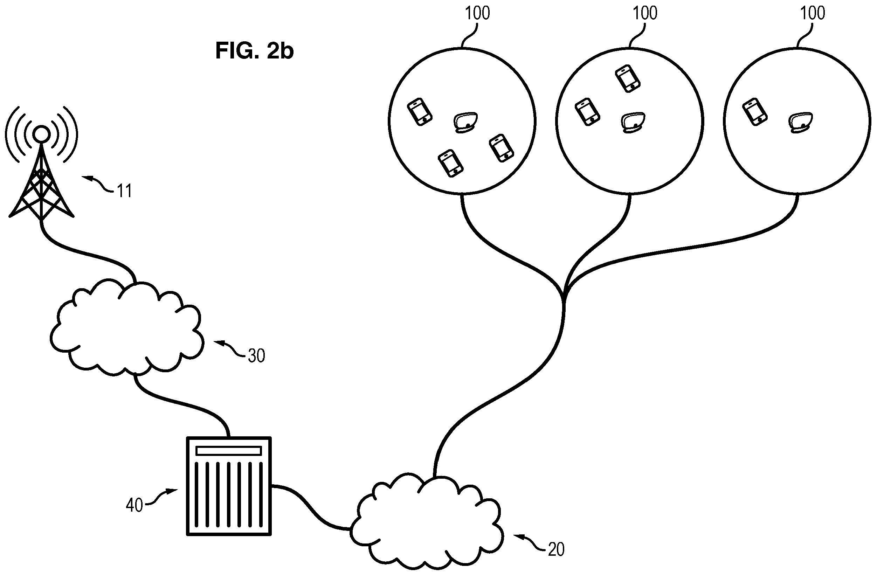

Les figures 2a et 2b illustrent l'architecture d'une macro-cellule 10 couverte par une station de base 11.

Comme déjà mentionné, les petites cellules 100 sont connectées au réseau d'un opérateur 30 via un réseau 20 Internet haut débit.

L'interface entre le réseau Internet haut débit et le réseau de l'opérateur est effectuée au moyen d'une passerelle 40.

La passerelle 40 permet aux stations de base de petites cellules 110 de communiquer avec le réseau de l'opérateur 30 de manière transparente sans avoir à introduire des modifications aux standards de communications cellulaires.

De plus, la passerelle 40 évite qu'un nombre excessif de terminaux soient directement connectés au réseau de l'opérateur 30.

Ainsi, un terminal qui est en liaison radio avec une petite cellule communique avec le réseau de l'opérateur via cette dernière.

La liaison radio n'est possible qu'avec une petite cellule active c'est-à-dire que la station de base définissant la petite cellule est sous tension.

On précise que l'on considère que la petite cellule peut être active c'est-à-dire que la station de base de petite cellule est sous tension ou bien que la petite cellule peut être inactive c'est-à-dire que la station de base de petite cellule n'est pas sous tension.

La gestion du trafic dans une macro-cellule comprenant un réseau de stations de base de petites cellules peut être mise en oeuvre de plusieurs manières.

Selon un mode de réalisation, la gestion du trafic vers les petites cellules est gérée de manière centralisée. La figure 2a illustre un tel mode de réalisation. Selon ce mode de réalisation, les stations de base de petites cellules sont gérées par un module de gestion 50 disposé entre le réseau Internet 20 et la passerelle 40. Le module de gestion 50 a pour fonction de gérer plusieurs petites cellules (trois sur la figure 2a). Ainsi, le module de gestion 50 est connecté d'un part aux stations de base de petites cellules du réseau de stations de base de petites cellules qu'il doit gérer et d'autre part au réseau Internet 20. Un tel module de gestion 50 permet de gérer le trafic à destination des petites cellules, d'activer/désactiver les petites cellules en fonction du trafic (voir ci-après). Ainsi, le module de gestion comprend une mémoire pour stocker le trafic (c'est-à-dire un ou plusieurs paquet(s) de données à destination d'au moins un terminal).

Selon un autre mode de réalisation, la gestion du trafic vers les petites cellules est gérée de manière distribuée. La figure 2b illustre un tel mode de réalisation. Selon ce mode de réalisation, les petites cellules elles-mêmes peuvent s'activer ou se désactiver de manière autonome en fonction du trafic

Selon ce mode gestion, l'ensemble des paquets de données qui est destiné aux terminaux qui se trouvent dans le réseau de petites cellules est directement accessibles par les stations de base de petites cellules.

Il y a deux possibilités d'implémentation de ce mode de gestion :
1) Toutes les stations de base de petites cellules reçoivent les paquets de données par l'intermédiaire du réseau cellulaire et ensuite elles stockent ces paquets de donnés dans une mémoire incluse dans chaque station de base de petite cellule;
2) Les paquets de données à destination des terminaux présents dans le réseau de petites cellules sont stockés dans une mémoire de la passerelle; les stations de base de petites cellules peuvent alors demander explicitement à la passerelle l'envoi des paquets de données qu'elles doivent transmettre.

Selon un autre mode de réalisation, la passerelle 40 peut avoir la fonction logique de contrôle du réseau de petites cellules, dans ce cas la passerelle 40 est elle-même le module de gestion.

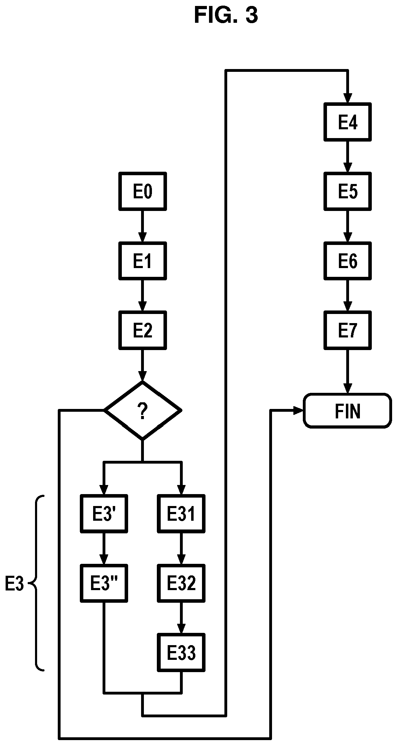

On décrit maintenant un procédé de gestion de plusieurs petites cellules en relation avec la figure 3. Un tel procédé peut être mis en oeuvre de manière distribuée ou centralisée.

Dans ce qui suit on considère que des paquets de données sont à acheminer du réseau de l'opérateur vers un ou plusieurs terminaux situés dans un réseau de stations de base de petites cellules (ou bien réseau de petites cellules, les deux expressions étant ici considérées comme équivalentes).

Dans une étape préliminaire E0 on détermine toutes les connexions possibles entre chaque terminal présent dans le réseau et les stations de base de petites cellules.

Dans cette étape il s'agit de déterminer dans quelle(s) petite(s) cellule(s) chaque terminal du réseau de petites cellules se trouve.

En outre, chaque connexion possible entre un terminal et station de base de petite cellule peut être définie par diverses métriques, métriques qui peuvent être utilisées au cours d'une étape de sélection (voir ci-après).

Pour chaque terminal dans la zone de couverture d'une station de base de petite cellule une métrique peut être la distance entre le terminal et la station de base de petite cellule. Une autre métrique peut être une évaluation du lien radio (niveau de puissance du signal reçu par le terminal de la station de base de petite cellule).

Cette étape préliminaire E0 est de préférence mise en oeuvre périodiquement afin de gérer les déplacements éventuels des terminaux dans le réseau de petites cellules.

Cette étape préliminaire E0 peut être mise en oeuvre de plusieurs manières :
- chaque station de base de petite cellule peut se réveiller périodiquement pendant une certaine durée pour détecter la présence éventuelle d'un terminal dans sa zone de couverture ;
- un terminal peut activer à distance une petite cellule par l'envoi d'un message de réveil auquel la station de base de petite cellule est sensible;
- le module de gestion peut avoir une connaissance de la position des terminaux par rapport à une station de base de petites cellules via une information de localisation que le terminal peut transmettre au module de gestion.

Comme on l'aura compris au cours de l'étape préliminaire E0, les petites cellules peuvent être actives pendant la durée nécessaire à la localisation d'au moins un terminal dans leur zone de couverture.

Bien entendu, une fois cette étape préliminaire terminée, les petites cellules redeviennent inactives.

Comme on l'a déjà mentionné, des paquets de données sont à transmettre à un ou plusieurs terminaux présents dans le réseau de petites cellules.

On précise que les paquets de données proviennent du réseau cellulaire et que ce dernier sait à quel réseau de petite cellule de la macro-cellule elle doit transmettre les paquets de données (ce mécanisme ne sera pas décrit ici).

Ainsi, dans une étape, on met en file d'attente E1 plusieurs paquets de données à destination d'au moins un terminal. Les paquets de données sont soit mis en file d'attente dans une mémoire de chaque station de base de petite cellule (gestion distribuée) soit dans une mémoire de la passerelle ou du module de gestion (gestion centralisée). On comprend que quel que soit le mode de gestion du trafic, il existe une zone de transit pour les paquets de données.

Dans le cas d'une gestion distribuée, seuls les paquets correspondants à un terminal présent dans la zone de couverture de la petite cellule considérée sont transmis à cette station de base de petite cellule afin d'y être stockés.

Les paquets de données peuvent être destinés à un seul terminal ou bien à des terminaux différents.

La mise en file d'attente E1 consiste à ne pas transmettre un paquet de données immédiatement vers le terminal destinataire.

Cette mise en file d'attente ne provoque par une réduction des performances dès lors que le temps d'attente respecte des contraintes relatives à la qualité de service.

Chaque paquet de données est défini par au moins un niveau de priorité. Ce niveau de priorité est maximal, par exemple, lorsque le paquet de données correspond à du trafic temps-réel, comme de la voix dans le cadre notamment d'un appel téléphonique à destination d'un terminal.

En revanche, le niveau de priorité sera minimal pour des paquets de données correspondant, par exemple, à des emails.

De manière préférée, le niveau de priorité est fonction d'une durée, le niveau de priorité étant maximal à l'issue d'une certaine durée seuil à l'issue de laquelle le paquet est considéré comme perdu.

De manière alternative ou complémentaire, le seuil est fonction de la durée nécessaire pour activer une station de base de petite cellule.

A nouveau de manière alternative ou complémentaire, le seuil est fonction de la durée nécessaire pour évaluer la qualité de la liaison radio entre un terminal et une station de base de petite cellule.

En effet, un paquet de données qui n'est pas transmis à l'issue d'une certaine durée est éliminé par le système et ne sera jamais transmis à un terminal. Ainsi, il faut prendre en compte les durées nécessaires aux préparatifs de la transmission : contrôle de puissance suite à l'évaluation de la qualité du lien radio, durée d'activation de la station de base de petite cellule. Ceci pour assurer une qualité de service aux utilisateurs des terminaux du réseau de petites cellules.

Les paquets de données mis en file d'attente sont ensuite classés E2 selon leur niveau de priorité croissant.

Puis, dès qu'un paquet de données de la file d'attente atteint un niveau de priorité maximal et on met en oeuvre les étapes suivantes.

Dans un premier temps, on sélectionne E3 au moins une petite cellule adaptée pour couvrir au moins un terminal pour lequel ledit paquet de données ayant un niveau de priorité maximal est destiné pour que seule au la petite cellule sélectionnée soit active. On utilise le terme terminal prioritaire pour définir un tel terminal.

Cette étape de sélection E3 peut être mise en oeuvre en comparant les diverses métriques obtenues au cours de l'étape préliminaire E0.

Selon un mode de réalisation, on sélectionne la station de base de petite cellule la plus proche du terminal prioritaire.

Selon un mode de réalisation complémentaire, on sélectionne la station de base de petite cellule pour laquelle le lien radio avec le terminal prioritaire est le meilleur.

Dans le cas d'une gestion centralisée, la sélection consiste à sélectionner E3' une petite cellule parmi celles qui sont possibles pour le terminal prioritaire, c'est le module de gestion qui va effectuer cette sélection E3' compte tenu de l'étape préliminaire E0 et activer E3" la station de base de petite cellule sélectionnée.

Dans le cas d'une gestion distribuée, la sélection E3 consiste à la mise en oeuvre des sous-étapes suivantes.

Chaque petite cellule va s'activer E31, puis dans le cas où plusieurs petites cellules couvrent le terminal prioritaire elles vont, chacune, comparer leurs métriques ci-dessus pour déterminer E32 en collaboration, la petite cellule qui fournit les meilleures métriques. Les autres petites cellules sont alors désactivées E33. A cette fin, les stations de base de petites cellules sont connectées entre elles par une connexion à très haut débit (par exemple fibre optique).

Dans tous les cas, comme on l'aura compris, à l'issu du procédé, une unique petite cellule est active pour transmettre un paquet de données ayant un niveau de priorité maximal.

Pour profiter de la transmission du paquet de données ayant le niveau de priorité maximal et de la petite cellule active, on va déterminer E4 un ensemble à transmettre d'au moins un paquet de données ayant un niveau de priorité inférieur au niveau de priorité maximal à destination d'au moins un terminal non prioritaire présent dans la petite cellule activée et/ou du terminal prioritaire. Cette étape permet d'extraire de la file d'attente des paquets de données qui sont destinés aux terminaux présents dans la petite cellule activée et d'extraire également les paquets à destination du terminal prioritaire qui sont dans la file d'attente.

Puis, on connecte E5 le terminal prioritaire et/ou le terminal non prioritaire à la station de base de la petite cellule activée et on route E6 les paquets de données de la station de base de petite cellule active vers les terminaux concernés.

Enfin, après le routage E6 des paquets de données, on désactive E7 la petite cellule active.

A noter que les paquets de données non transmis sont conservés dans la file d'attente jusqu'à ce qu'un paquet de données atteint un niveau de priorité maximal.

De cette façon, le procédé selon l'invention permet de profiter de la transmission d'un paquet de données qui ne peut plus attendre pour transmettre à tous les terminaux présents dans la petite cellule activée les paquets de données qui leurs sont destinés.

Ainsi, entre deux transmissions les durées d'inactivation des petites cellules sont plus longues que dans le cas d'une gestion selon laquelle un paquet de données à destination d'un terminal est transmis immédiatement.

## Revendications

1. Procédé de gestion du trafic d'un réseau d'une pluralité de stations de base de petites cellules (110) disposées dans une macro-cellule (10) dans laquelle se trouve au moins un terminal (120), chaque station de base de petite cellule (110) étant adaptée pour couvrir une petite cellule (100) de la macro-cellule (10), le procédé comprenant les étapes suivantes :
- détermination (E0) d'au moins une connexion possible entre ledit au moins un terminal (120) et une station de base de petite cellule (110) ; le procédé étant **caractérisé en ce qu'**il comprend les étapes suivantes :
- mise en file d'attente (E1) de plusieurs paquets de données à destination dudit au moins un terminal (120), chaque paquet de données étant défini par au moins un niveau de priorité;
- classement (E2) des paquets de données selon leur niveau de priorité;
le procédé comprenant en outre, dès qu'un paquet de données de la file d'attente a un niveau de priorité maximal, les étapes suivantes :
- sélection (E3) d'une petite cellule adaptée pour couvrir au moins un premier terminal pour lequel ledit paquet de données ayant un niveau de priorité maximal est destiné, dit terminal prioritaire; seule ladite petite cellule sélectionnée devra être active;
- détermination (E4) d'un ensemble à transmettre d'au moins un paquet de données ayant un niveau de priorité inférieur au niveau de priorité maximal à destination d'au moins un second terminal présent dans ladite petite cellule activée, dit terminal non prioritaire et/ou à destination dudit terminal prioritaire;
- connexion (E5) dudit terminal prioritaire et/ou dudit terminal non prioritaire à la station de base de ladite petite cellule active;
- routage (E6) des paquets de données dudit ensemble à transmettre vers les terminaux prioritaires et non prioritaires.

2. Procédé selon la revendication 1, dans lequel la sélection (E3) consiste à la mise en oeuvre des sous-étapes suivantes :
- on active (E31) au moins une petite cellule adaptée pour couvrir au moins un terminal prioritaire pour lequel ledit paquet de données ayant un niveau de priorité maximal est destinée;
dans le cas où plusieurs petites cellules sont activées et couvrent le terminal prioritaire ;
- on sélectionne (E32) parmi les petites cellules activées au moins une petite cellule;
- on désactive (E33), lesdites petites cellules activées non sélectionnées.

3. Procédé selon la revendication 1, dans lequel dans lequel la sélection (E3) consiste à la mise en oeuvre des sous-étapes suivantes :
- on sélectionne (E3') parmi les petites cellules activées couvrant le terminal prioritaire, au moins une petite cellule;
- on active (E3") ladite petite cellule sélectionnée.

4. Procédé selon l'une des revendications précédentes, dans lequel le niveau de priorité est fonction d'une durée, le niveau de priorité étant maximal à l'issue d'une durée seuil pour laquelle le paquet de données est considéré comme perdu.

5. Procédé selon la revendication 4, dans lequel le seuil est fonction de la durée nécessaire pour activer une petite cellule.

6. Procédé selon l'une des revendications 4 à 5, dans lequel le seuil est fonction de la durée nécessaire pour évaluer la qualité de la liaison radio entre un terminal et une petite cellule.

7. Procédé selon l'une des revendications précédentes, dans lequel, après le routage (E6) des paquets de données, on désactive (E7) la petite cellule active.

8. Procédé selon l'une des revendications précédentes, dans lequel on sélectionne (E3, E32) la petite cellule la plus proche dudit terminal prioritaire.

9. Procédé selon l'une des revendications précédentes, dans lequel on sélectionne (E3, E32) la petite cellule pour laquelle le lien radio entre la petite cellule et le terminal prioritaire est le meilleur.

10. Réseau de communication comprenant un réseau d'une pluralité de stations de base de petites cellules (110) disposées dans une macro-cellule (10) dans laquelle se trouve au moins un terminal (120), chaque station de base de petite cellule (110) étant adaptée pour couvrir une petite cellule (100) de la macro-cellule (10) et pour être en liaison radio avec ledit au moins un terminal (120), le réseau comprenant un module de gestion (50) connecté au réseau de stations de base de petites cellules, le module de gestion comprenant des moyens pour stocker les paquets de données et pour gérer le trafic de manière centralisée au moyen d'un procédé selon l'une des revendications précédentes.

11. Réseau de communication comprenant un réseau d'une pluralité de stations de base de petites cellules (110) disposées dans une macro-cellule (10) dans laquelle se trouve au moins un terminal (120), chaque station de base de petite cellule (110) étant adaptée pour couvrir une petite cellule (100) de la macro-cellule (10) et pour être en liaison radio avec ledit au moins un terminal (120), réseau dans lequel les stations de base de petites cellules comprennent des moyens pour stocker les paquets de données et pour gérer le trafic de manière distribuée au moyen d'un procédé selon l'une des revendications précédentes.

## Patentansprüche

1. Verfahren zur Verwaltung des Verkehrs eines Netzwerks einer Vielzahl von Kleinzellen-Basisstationen (110), die in einer Makrozelle (10) angeordnet sind, in der sich wenigstens ein Endgerät (120) befindet, wobei jede Kleinzellen-Basisstation (110) dafür eingerichtet ist, eine Kleinzelle (100) der Makrozelle (10) abzudecken,
wobei das Verfahren die folgenden Schritte umfasst:
- Bestimmen (E0) von wenigstens einer möglichen Verbindung zwischen dem wenigstens einen Endgerät (120) und einer Kleinzellen-Basisstation (110);
wobei das Verfahren **dadurch gekennzeichnet ist, dass** es die folgenden Schritte umfasst:
- Einreihen (E1) von mehreren Datenpaketen mit dem wenigstens einen Endgerät (120) als Bestimmungsort in eine Warteschlange, wobei jedes Datenpaket durch wenigstens eine Prioritätsstufe definiert ist;
- Klassieren (E2) der Datenpakete gemäß ihrer Prioritätsstufe;
wobei das Verfahren, sobald ein Datenpaket der Warteschlange eine maximale Prioritätsstufe besitzt, weiter die folgenden Schritte umfasst:
- Auswählen (E3) einer Kleinzelle, die dafür eingerichtet ist, wenigstens ein erstes Endgerät, prioritäres Endgerät genannt, abzudecken, für das das Datenpaket, das eine maximale Prioritätsstufe besitzt, bestimmt ist; wobei nur die ausgewählte Kleinzelle aktiv sein darf;
- Bestimmen (E4) eines zu übertragenden Satzes von wenigstens einem Datenpaket, das eine niedrigere Prioritätsstufe besitzt als die maximale Prioritätsstufe, mit wenigstens einem zweiten, in der aktivierten Kleinzelle vorhandenen Endgerät, nichtprioritäres Endgerät genannt, zum Bestimmungsort, und/oder dem prioritären Endgerät zum Bestimmungsort;
- Verbinden (E5) des prioritären Endgeräts und/oder des nicht-prioritären Endgeräts mit der Basisstation der aktiven Kleinzelle;
- Routen (E6) der Datenpakete des zu übertragenden Satzes zu den prioritären und nicht-prioritären Endgeräten.

2. Verfahren gemäß Anspruch 1, wobei das Auswählen (E3) im Umsetzen der folgenden Unterschritte besteht:
- Aktivieren (E31) von wenigstens einer Kleinzelle, die dafür eingerichtet ist, wenigstens ein prioritäres Endgerät abzudecken, für das das Datenpaket, das eine maximale Prioritätsstufe besitzt, bestimmt ist;
in dem Fall, in dem mehrere Kleinzellen aktiviert sind und das prioritäre Endgerät abdecken;
- Auswählen (E32) von wenigstens einer Kleinzelle unter den aktivierten Kleinzellen;
- Deaktivieren (E33) der nicht ausgewählten aktivierten Kleinzellen.

3. Verfahren gemäß Anspruch 1, wobei das Auswählen (E3) im Umsetzen der folgenden Unterschritte besteht:
- Auswählen (E3') von wenigstens einer Kleinzelle unter den aktivierten Kleinzellen, die das prioritäre Endgerät abdecken;
- Aktivieren (E3") der ausgewählten Kleinzelle.

4. Verfahren gemäß einem der vorhergehenden Ansprüche, wobei die Prioritätsstufe von einem Zeitraum abhängig ist, wobei die Prioritätsstufe am Ende eines Schwellenzeitraums maximal ist, für den das Datenpaket als verloren gilt.

5. Verfahren gemäß Anspruch 4, wobei die Schwelle von dem Zeitraum abhängig ist, der erforderlich ist, um eine Kleinzelle zu aktivieren.

6. Verfahren gemäß einem der Ansprüche 4 bis 5, wobei die Schwelle von dem Zeitraum abhängig ist, der erforderlich ist, um die Qualität der Funkverbindung zwischen einem Endgerät und einer Kleinzelle zu beurteilen.

7. Verfahren gemäß einem der vorhergehenden Ansprüche, wobei, nach dem Routen (E6) der Datenpakete, die aktive Kleinzelle deaktiviert (E7) wird.

8. Verfahren gemäß einem der vorhergehenden Ansprüche, wobei die Kleinzelle ausgewählt (E3, E32) wird, die dem prioritären Endgerät am nächsten ist.

9. Verfahren gemäß einem der vorhergehenden Ansprüche, wobei die Kleinzelle ausgewählt (E3, E32) wird, für die die Funkverbindung zwischen der Kleinzelle und dem prioritären Endgerät am besten ist.

10. Kommunikationsnetzwerk, umfassend ein Netzwerk einer Vielzahl von Kleinzellen-Basisstationen (110), die in einer Makrozelle (10) angeordnet sind, in der sich wenigstens ein Endgerät (120) befindet, wobei jede Kleinzellen-Basisstation (110) dafür eingerichtet ist, eine Kleinzelle (100) der Makrozelle (10) abzudecken, und dafür, in Funkverbindung mit dem wenigstens einen Endgerät (120) zu stehen, wobei das Netzwerk ein Verwaltungsmodul (50) umfasst, das mit dem Netzwerk von Kleinzellen-Basisstationen verbunden ist, wobei das Verwaltungsmodul Mittel umfasst, um die Datenpakete zu speichern und um den Verkehr mittels eines Verfahrens gemäß einem der vorhergehenden Ansprüche in zentralisierter Weise zu verwalten.

11. Kommunikationsnetzwerk, umfassend ein Netzwerk einer Vielzahl von Kleinzellen-Basisstationen (110), die in einer Makrozelle (10) angeordnet sind, in der sich wenigstens ein Endgerät (120) befindet, wobei jede Kleinzellen-Basisstation (110) dafür eingerichtet ist, eine Kleinzelle (100) der Makrozelle (10) abzudecken, und dafür, mit dem wenigstens einen Endgerät (120) in Funkverbindung zu stehen, in welchem Netzwerk die Kleinzellen-Basisstationen Mittel umfassen, um die Datenpakete zu speichern und um den Verkehr mittels eines Verfahrens gemäß einem der vorhergehenden Ansprüche in verteilter Weise zu verwalten.

## Claims

1. Method for managing the traffic of a network of a plurality of small cell base stations (110) arranged in a macro-cell (10) in which there is at least one terminal (120), each small cell base station (110) being adapted to cover a small cell (100) of the macro-cell (10), the method comprising the following steps:
- determining (E0) at least one possible connection between said at least one terminal (120) and a small cell base station (110);
the method being **characterised in that** it comprises the following steps:
- placing in a queue (E1) several data packets addressed to said at least one terminal (120), each data packet being defined by at least one priority level;
- classifying (E2) the data packets as per their priority level;
the method, as soon as a data packet in the queue reaches a maximal priority level, further comprising the following steps:
- selecting (E3) a small cell adapted to cover at least one first terminal to which said data packet having a maximal priority level is addressed, called a priority terminal; only said selected small cell must be active;
- determining (E4) a group to be transmitted of at least one data packet having a lower priority level than the maximal priority level and addressed to at least one second terminal present in said activated small cell, called a non-priority terminal, and/or addressed to said priority terminal;
- connecting (E5) said priority terminal and/or said non-priority terminal to the base station of said active small cell;
- routing (E6) the data packets of said group to be transmitted towards the priority and non-priority terminals.

2. Method according to claim 1, wherein the selection step (E3) consists of implementing the following sub-steps:
- activating (E31) at least one small cell adapted to cover at least one priority terminal to which said data packet having a maximal priority level is addressed;
in the event that a plurality of small cells is activated and cover the priority terminal;
- selecting (E32) at least one small cell from among the activated small cells;
- deactivating (E33) said non-selected activated small cells.

3. Method according to claim 1, wherein the selection (E3) consists of implementing the following sub-steps:
- selecting (E3') at least one small cell from among the activated small cells covering the priority terminal;
- activating (E3") said selected small cell.

4. Method according to any of the previous claims, wherein the priority level is a function of a time, the priority level being maximal after a threshold time after which the data packet is considered lost.

5. Method according to claim 4, wherein the threshold is a function of the time needed to activate a small cell.

6. Method according to either claim 4 or claim 5, wherein the threshold is a function of the time needed to evaluate the quality of the radio link between a terminal and a small cell.

7. Method according to any of the previous claims wherein, after routing (E6) the data packets, the active small cell is deactivated (E7).

8. Method according to any of the previous claims, wherein the small cell the closest to said priority terminal is selected (E3, E32).

9. Method according to any of the previous claims, wherein the small cell having the best radio link between the small cell and the priority terminal is selected (E3, E32).

10. Communication network comprising a network of a plurality of small cell base stations (110) arranged in a macro-cell (10) in which there is at least one terminal (120), each small cell base station (110) being adapted to cover a small cell (100) of the macro-cell (10) and to be linked via radio to said at least one terminal (120), the network comprising a management module (50) connected to the network of small cell base stations, the management module comprising means for storing the data packets and for managing the traffic in a centralised manner by means of a method according to any of the previous claims.

11. Communication network comprising a network of a plurality of small cell base stations (110) arranged in a macro-cell (10) in which there is at least one terminal (120), each small cell base station (110) being adapted to cover a small cell (100) of the macro-cell (10) and to be linked via radio to said at least one terminal (120), in which network the small cell base stations comprise means for storing the data packets and for managing the traffic in a distributed manner by means of a method according to any of the previous claims.
